# EUROPÄISCHE PATENTANMELDUNG

(11) **EP 0 767 573 A2**
(43) Veröffentlichungstag der Anmeldung: **09.04.1997**
(21) Anmeldenummer: 96111874.2
(22) Anmeldetag: 23.07.1996
(51) Int. Cl.: H04M 19/00, H04M 19/08

(54) **Schaltungsanordnung zur Gleichspannungs- und Wechselspannungsauskopplung**

(30) Priorität: 29.09.1995 DE 19536520
(71) Anmelder: SIEMENS AKTIENGESELLSCHAFT, 80333 München (DE)
(72) Erfinder: Dielacher, Franz, Dr. Dipl.-Ing., 9500 Villach (AT); Hauptmann, Jörg, Dipl.-Ing., 9500 Villach (AT); Pilgram, Berndt, Dipl.-Ing., 9543 Arraich (AT)

(57) **Zusammenfassung**

Eine Schaltungsanordnung zur Gleichspannungs- und Wechselspannungsauskopplung enthält ein erstes (1, 2) und ein zweites (3, 4) Leitungspaar, die je ein Wechselspannungssignal führen und zwischen denen eine Gleichspannung vorliegt. Zur Wechselspannungsauskopplung sind die Leitungen kapazitiv (20, 21, 22, 23) mit den Eingängen einer Signalempfangseinrichtung (10) verbunden. Zur Auskopplung eines Pols der Gleichspannung sind mit den Leitungen des jeweiligen Leitungspaares verbundene Dioden (30, 31; 40, 41) vorgesehen. Die Dioden sind über je einen Stromquellentransistor (32, 33; 42, 43) mit einem Anschluß für den Pol der Gleichspannung verbunden. Die Steueranschlüsse der Stromquellentransistoren werden vom Mittelabgriff eines zwischen die Dioden geschalteten Spannungsteilers (35, 36; 45, 46) gesteuert. Die Lösung zur Gleichspannungsauskopplung ist ohne weiteres integrierbar.

## Beschreibung

Die Erfindung betrifft eine Schaltungsanordnung zur Gleichspannungs- und Wechselspannungsauskopplung, bei der die Leitungen je eines Leitungspaares ein Wechselspannungssignal führen und zwischen den Leitungspaaren eine Gleichspannung vorliegt und die Gleichspannung über mit den Leitungen verbundenen Dioden abgegriffen wird.

Solche Schaltungsanordnungen werden beispielsweise in der digitalen Telekommunikationstechnik in ISDN-(Integrated Services Digital Network)-Netzen bei der 4-Draht-Schnittstelle zum Anschluß eines Endgeräts an das ISDN-Netz verwendet. Diese Anordnung wird als sogenannte S-Bus-Schnittstelle bezeichnet. In der Literaturstelle Siemens Components, 27 (1989), Heft 3, "Spannungsversorgung im ISDN", Seiten 106 bis 108 ist ein Anwendungsbeispiel für die Spannungsversorgung im Endgerät bei einem S-Busanschluß beschrieben. Die Sende- und Empfangsleitungspaare werden mit einem Übertrager abgeschlossen, dessen Ausgangsseite in die Eingangsschaltung des ISDN-Basisanschlusses eingespeist. Mittels einer Mittelpunktanzapfung an der netzseitigen Wicklung des Übertragers werden die Pole einer Gleichspannung abgegriffen. Durch einen getakteten Spannungsregler wird eine geregelte Konstantspannung erzeugt, durch die die Funktionseinheiten des Endgeräts mit Spannung versorgt werden.

Da durch die endgeräteseitigen Transformatoren der Versorgungsstrom für das Endgerät fließt, sind diese vormagnetisiert. Damit ein Nutzsignal möglichst verzerrungsarm an deren Sekundärseite ausgekoppelt werden kann, sind besondere Anforderungen an die Linearität der Transformatoren zu stellen. Solche Transformatoren sind deshalb aufwendig herzustellen und dementsprechend teuer.

In der EP-A1-0 590 242 ist eine Schaltungsanordnung zur Speisung eines Endgerätes in einem Kommunikationsnetzwerk beschrieben, bei dem die Leitungen paarweise ein Wechselsignal führen und zwischen den Leitungspaaren eine Gleichspannung vorliegt, die an der netzseitig eingespeist wird. Die Leitungen sind zur Wechselspannungsauskopplung kapazitiv mit dem Endgerät verbunden. Endgerätseitig sind an die Leitungen je eines Leitungspaares elektronische Drosseln angeschlossen, so daß von jedem Leitungspaar ein Pol der Gleichspannung abgegriffen wird. An der vom Endgerät abgewandten Seite des Verbindungsknotens einer Leitung mit je einer Drossel ist in Leitung jeweils die Anoden-Katoden-Strecke einer Diode geschaltet. Die Dioden eines Leitungspaares weisen zueinander gleiche, die Dioden verschiedener Leitungspaare entgegengesetzte Orientierung auf. Die Dioden dienen zum Verpolschutz.

Die Aufgabe der Erfindung besteht darin, eine Schaltungsanordnung der eingangs genannten Art dahingehend zu verbessern, daß die Schaltung höher integriert und somit wirtschaftlicher herstellbar ist.

Gelöst wird diese Aufgabe durch eine Schaltungsanordnung nach den Merkmalen des Patentanspruchs 1.

Bei der erfindungsgemäßen Schaltungsanordnung ist kein Übertrager zum Auskoppeln von Gleich- und Nutzsignalwechselspannungen mehr notwendig. Stattdessen werden Halbleiterbauelemente verwendet. Diese können in einer integrierten Schaltung integriert werden, vorzugsweise in einem Spannungsregler, durch den die endgeräteseitige Versorgungsspannung aus der übertragenen Gleichspannung bereitgestellt wird.

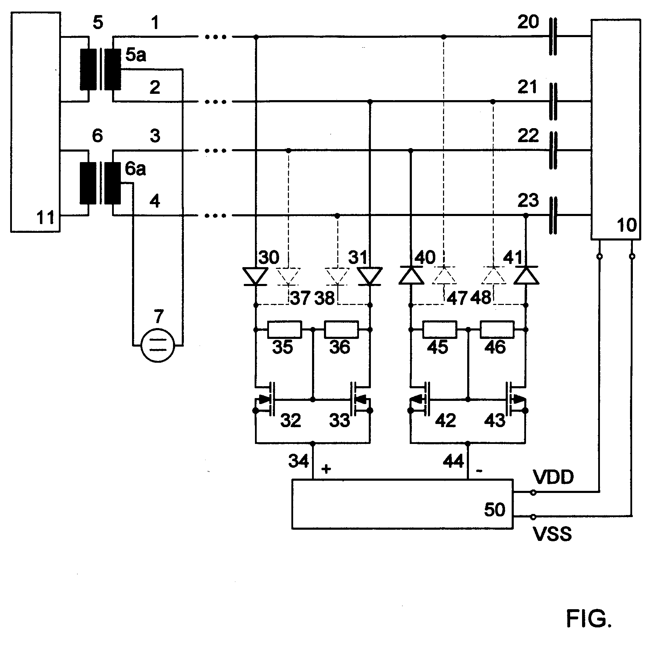

Die Erfindung wird nachfolgend anhand des in der Zeichnung dargstellten Ausführungsbeispiels näher erläutert. Die in der einzigen Figur dargestellte Schaltungsanordnung zeigt eine S-Bus-Übertragungseinrichtung mit der erfindungsgemäßen Anordnung zur Auskopplung von Gleich- und Wechselspannungssignalen am Endgerät. Die Schaltung enthält ein erstes Leitungspaar 1, 2, über das ein Nutzsignal an das Endgerät übertragen wird, welches dort in den Empfangsbaustein 10 eingespeist wird. Ein zweites Leitungspaar 3, 4 dient zur Übertragung von Wechselsignalen im Rückkanal. Auf Netzseite ist je ein Übertrager 5, 6 vorgesehen, durch die die Nutzsignale in die Leitungen 1, 2 eingekoppelt bzw. aus den Leitungen 3, 4 in den Schnittstellenadapter 11 ausgekoppelt werden. Die endgeräteseitigen Wicklungen 5a, 6a der Übertrager 5 bzw. 6 dienen zur Gleichspannungseinkopplung. Hierzu ist je eine Mittelpunktanzapfung der Wicklungen 5a bzw. 6a vorgesehen, zwischen die eine Spannungsquelle 7 geschaltet ist. Somit liegt zwischen dem Leitungspaar 1, 2 und dem Leitungspaar 3, 4 eine durch die Spannungsquelle 7 bereitgestellte Gleichspannung an; darüber hinaus wird auf den Leitungen 1, 2 ein erstes Nutzsignal und auf den Leitungen 3, 4 ein zweites Nutzsignal übertragen. Die Nutzsignale sind dabei differentielle Nutzsignale, das heißt, das Signal auf der einen Leitung des Leitungspaares liegt invertiert zum Signal auf der anderen Leitung des Leitungspaares vor. Die Versorgungsspannung der Spannungsquelle 7 beträgt beispielsweise 40 V, wobei der Pluspol am Übertrager 5, der Minuspol am Übertrager 6 angeschlossen ist. Dieser sogenannte S-Bus dient zur Übertragung von Gleich- und Nutzsignalen zwischen einer Vermittlungsanlage, in der die Einrichtung 11 angeordnet ist, und einem Endgerät bei einem Telefonteilnehmer, in dem der Schnittstellenbaustein 10 angeordnet ist.

Zur Wechselspannungseinkopplung in den Schnittstellenbaustein 10 des Endgeräts, also zur Einkopplung des Nutzsignals, ist je ein Kondensator 20, 21, 22, 23 in die Leitungen 1...4 geschaltet, durch den Gleichspannungssignale abgetrennt werden. Zur endgeräteseitigen Auskopplung der Gleichspannung ist eine mit der Leitung 1 verbundene Diode 30 und eine mit der Leitung 2 verbundene Diode 31 vorgesehen. Die Anoden der Dioden 30, 31 sind dabei an die Leitungen 1, 2 angeschlossen. Die Katoden der Dioden 30, 31 sind über je eine Stromquelle 32, 33 mit einem Anschluß 34 verbunden, an dem der Plus-Pol der über die Leitungen zu übertragenden Gleichspannung abgegriffen wird. Die Stromquellen 32, 33 sind als selbstsperrende n-Kanal-MOS-Transistoren ausgeführt. Hierzu sind die Laststrompfade der Transistoren, also ihre Drain-Source-Strecken, zwischen die Dioden und den Anschluß 34 geschaltet. Die mit den Dioden 30, 31 verbundenen Anschlüsse der Transistoren 32 bzw. 33 wirken als Drainanschlüsse, die mit dem Plus-Pol 34 verbundenen Anschlüsse als Sourceanschlüsse der Transistoren. Zur Erzeugung einer Gate-Source-Spannung sind die Kopplungsknoten zwischen den Dioden und den Drainanschlüssen der MOS-Transistoren über einen Spannungsteiler 35, 36 miteinander verbunden. Der Mittelabgriff des Spannungsteilers 35, 36 ist mit den Gateanschlüssen der Transistoren 32, 33 gemeinsam verbunden.

Bei der eingangs angegebenen Polarität der Gleichspannungsquelle 7 liegt am Spannungsteiler 35, 36 das um den Spannungsabfall an den Dioden 30, 31 und außerdem um den Spannungsabfall längs der Leitungen 1, 2 vom Übertrager 5 bis zum Anschlußpunkt der Dioden 30, 31 verringerte Plus-Potential der Spannungsquelle 7 an. Der am Anschluß 34 entnehmbare Strom wird von den Stromquellentransistoren 32, 33 über die Dioden 30 bzw. 31 von den Leitungen 1, 2 geliefert. Liegt kein Wechselnutzsignal an den Leitungen 1, 2 an, liegt an den Katoden der Dioden 30, 31 die gleiche Spannung an. Bei einem Nutzsignal, das beim S-Bus auf den Leitungen 1, 2 differentiell übertragen wird, liegt an den Katoden der Dioden 30, 31 die Nutzsignaldifferenz an. Vorausgesetzt, daß die Widerstände 35, 36 und die Dioden 30, 31 mit möglichst gleichen Bauelementeparametern jeweils ausgeführt sind, bleibt das Potential am Mittelabgriff des Spannungsteilers 35, 36 unverändert. Die Aussteuerung der Transistoren 32, 33 wird deshalb durch das Nutzsignal nicht verändert, wenn diese ebenfalls möglichst gleiche Parameter aufweisen. Wichtig ist, daß die Bauelementeparameter der Elemente 30, 35, 32 möglichst gut mit den Parametern der Elemente 31, 36, 33 übereinstimmen, also im wesentlichen gleich sind, so daß beide Stromzweige symmetrisch zueinander dimensioniert sind und differentielle Nutzsignale bei der Aussteuerung der Transistoren 32, 33 nicht wirksam werden. Bei Integration der Elemente 30...36 auf einem einzigen integrierten Halbleiterchip ist diese Bedingung erfahrungsgemäß relativ gut erfüllt.

Zur Bereitstellung des negativen Pols der zu übertragenden Gleichspannung an einem Minus-Anschluß 44 sind Dioden 40, 41 mit im Vergleich zu den Dioden 30, 31 umgekehrter Orientierung vorgesehen. Die Dioden 40, 41 sind an die Leitungen 3, 4 angeschlossen, die vom negativen Pol der Speisespannungsquelle 7 versorgt werden. Als Stromquellen sind MOS-Transistoren 42, 43 der entgegengesetzten Polarität, d. h. selbstsperrende p-Kanal-MOS-Transistoren vorgesehen. Hierzu ist der Laststrompfad der Transistoren zwischen die Dioden und den Anschluß 44 geschaltet. Ein Spannungsteiler 45, 46 sorgt in entsprechender Weise für die Ansteuerung der Transistoren 42, 43. In diesem Zweig fließt der Strom vom Minus-Pol 44 über die MOS-Transistoren 42, 43 und die Dioden 40, 41 in die Leitungen 3, 4 an den Minus-Pol der Speisegleichspannungsquelle 7 zurück. Ansonsten entspricht die Funktionsweise des Schaltungsteils für die Auskopplung des Minus-Pols derjenigen für die Auskopplung des Plus-Pols.

Um einen umgekehrten Anschluß der Speisespannungsquelle 7 zu ermöglichen, bei dem der Plus-Pol an die Wicklung 6a angeschlossen ist und der Minus-Pol an die Wicklung 5a, sind im Zweig der Stromquellen 32, 33 - mit unterbrochenen Linien dargestellte - weitere Dioden 37, 38 angeschlossen, deren Anoden mit den Leitungen 3 bzw. 4 gekoppelt sind und deren Katoden mit den Katoden der Dioden 30, 31 gekoppelt sind. In entsprechender Weise mit umgekehrter Orientierung sind zur Auskopplung des Minus-Pols weitere Dioden 47, 48 vorgesehen, die an die Leitungen 1, 2 angeschlossen sind.

Die Widerstände 35, 36 sind hochohmig dimensioniert. Wegen der symmetrischen Dimensionierung weisen die Stromquellentransistoren 32, 33 hochohmige Innenwiderstände für die differentiellen Nutzsignale auf. Insgesamt ergibt sich deshalb für die Nutzsignale eine nur hochohmige Verbindung zwischen den Leitungen 1, 2, so daß die Nutzsignale kaum gestört werden. An der Ausgangsseite der Stromquellentransistoren 32, 33 am Plus-Pol 34 kann ein Gleichstrom niederohmig entnommen werden. Entsprechendes gilt für den Minus-Pol 44 und die Leitungen 3, 4. Die Transistoren können wie dargestellt MOS-Transistoren sein oder alternativ bipolare npn- bzw. pnp-Transistoren.

Die Pole 34, 44 der im Endgerät wiedergewonnenen Gleichspannung werden in einen Spannungsregler 50 eingespeist. Zwischen den Polen 34, 44 liegt die Gleichspannung der Spannungsquelle 7 verringert um den Spannungsabfall längs der Übertragungsleitungen, der Dioden und der Stromquellen an. Der Spannungsregler 50, der zweckmäßigerweise ein getakteter Spannungsregler ist, beispielsweise ein Schaltnetzteil, erzeugt daraus eine Versorgungsspannung VDD, VSS zur Versorgung der Funktionseinheiten im Endgerät.

Alternativ zur beschriebenen Ausführung können die Stromquellen auch als bipolare Transistoren realisiert werden, wobei deren Laststrompfade, also deren Kollektor-Emitter-Strecken jeweils zwischen die Dioden 30, 31, 40, 41 und die Anschlüsse zum Abgriff 34 bzw. 44 des jeweiligen Spannungspols der Gleichspannung geschaltet sind. Darüber hinaus können die Kopplungskondensatoren 20, 21, 22, 23 alternativ zur Figur in den jeweiligen Signalleitungen 1, 2, 3 bzw. auch vor den Anschlußknoten der Dioden 30, 31, 40, 41 empfangsgerätseitig angeordnet werden. Prinzipiell sind je nach Dimensionierung auch Realisierungen denkbar, in denen die diskreten Kopplungskondensatoren 20, 21, 22, 23 weggelassen werden.

## Patentansprüche

1. Schaltungsanordnung zur Gleichspannungs- und Wechselspannungsauskopplung aus einem ersten (1, 2) und einem zweiten (3, 4) Leitungspaar, bei dem die Leitungspaare je ein Wechselpannungssignal führen und zwischen den Leitungspaaren eine Gleichspannung vorliegt, die Leitungen (1, 2, 3, 4) an Eingänge einer Signalempfangseinrichtung (10) gekoppelt sind, die Leitungen (1, 2) des ersten Leitungspaares über je eine Diode (30, 31) mit einer ersten Orientierung und den Laststrompfad eines Transistors (32, 33) mit einem Anschluß (34) zum Abgriff eines Potentials (+) der Gleichspannung verbunden sind, die Leitungen (3, 4) des zweiten Leitungspaares über je eine Diode (40, 41) mit einer zweiten, zur ersten entgegengesetzten Orientierung und den Laststrompfad eines Transistors (42, 43) mit einem Anschluß (44) zum Abgriff eines anderen Potentials (-) der Gleichspannung verbunden sind und die Transistoren von einer zwischen den mit ihnen gekoppelten Dioden (30, 31; 40, 41) abgreifbaren Spannung gesteuert werden.

2. Schaltungsanordnung nach Anspruch 1,
**dadurch gekennzeichnet**, daß
die Dioden (30, 31) mit der ersten Orientierung und die Dioden (40, 41) mit der zweiten Orientierung jeweils über einen Spannungsteiler (35, 36; 45, 46) miteinander und über die Reihenschaltung der Laststrompfade von mindestens zwei Transistoren (32, 33; 42, 43) verbunden sind, daß die Steuerelektroden der Transistoren miteinander und an den Mittelabgriff des jeweiligen Spannungsteilers gekoppelt sind und daß der Kopplungsknoten der Laststrecken der Transistoren mit dem jeweiligen Anschluß (34, 44) zum Abgriff der Gleichspannung gekoppelt ist.

3. Schaltungsanordnung nach Anspruch 1 oder 2,
**dadurch gekennzeichnet**, daß
die Dioden (30, 31) mit der ersten Orientierung mit weiteren Dioden (37, 38) mit gleicher Orientierung gekoppelt sind, die mit den Leitungen (3, 4) des zweiten Leitungspaares verbunden sind und daß die Dioden (40, 41) mit der zweiten Orientierung mit weiteren Dioden (47, 48) mit gleicher Orientierung gekoppelt sind, die mit den Leitungen (1, 2) des ersten Leitungspaares verbunden sind.

4. Schaltungsanordnung nach einem der Ansprüche 1 bis 3, **dadurch gekennzeichnet**, daß die mit den Dioden (35, 36) der ersten Orientierung verbundenen Transistoren (32, 33) und die mit den Dioden (40, 41) der zweiten Orientierung verbundenen Transistoren (42, 43) entgegengesetzten Leitungstyp aufweisen.

5. Schaltungsanordnung nach einem der Ansprüche 1 bis 4, **gekennzeichnet durch** einen Spannungsregler (50), der eingangsseitig mit den Anschlüssen (34, 44) zum Abgriff der zu übertragenden Gleichspannung verbunden ist und ausgangsseitig eine geregelte Versorgungsspannung (VDD, VSS) zur Speisung der Signalempfangseinrichtung (10) enthält.

6. Schaltungsanordnung nach einem der Ansprüche 1 bis 5, **dadurch gekennzeichnet**, daß die Leitungen (1, 2, 3, 4) an die Eingänge der Signalempfangseinrichtung (10) kapazitiv (20, 21, 22, 23) gekoppelt sind.
